# EUROPÄISCHE PATENTSCHRIFT

(11) **EP 3 517 470 B1**
(45) Veröffentlichungstag und Bekanntmachung des Hinweises auf die Patenterteilung: **14.12.2022**
(21) Anmeldenummer: 19150025.5
(22) Anmeldetag: 02.01.2019
(51) Int. Cl.: B65H 54/22

(54) **VERFAHREN ZUM BETREIBEN EINER SPINN- ODER SPULMASCHINE**
METHOD FOR OPERATING A SPINNING OR WINDING MACHINE
PROCÉDÉ DE FONCTIONNEMENT D'UNE MACHINE À FILER OU À EMBOBINER

(30) Priorität: 09.01.2018 DE 102018100364
(43) Veröffentlichungstag der Anmeldung: 31.07.2019
(73) Patentinhaber: Maschinenfabrik Rieter AG, 8406 Winterthur (CH)
(72) Erfinder: BAHLMANN, Bernd, 86529 Schrobenhausen (DE); HUETTINGER, Franz, 85290 Geisenfeld (DE)
(74) Vertreter: Canzler & Bergmeier Patentanwälte Partnerschaft mbB

(56) Entgegenhaltungen:
- EP-A1- 1 065 303
- EP-A1- 3 162 930
- EP-A2- 2 108 723
- DE-A1- 4 008 794

## Beschreibung

Die vorliegende Erfindung betrifft ein Verfahren zum Betreiben einer Spinn-oder Spulmaschine mit einer Vielzahl gleichartiger Arbeitsstellen und mehreren im Bereich der Arbeitsstellen angeordneten Eingabe-Terminals, wobei zumindest zeitweise wenigstens ein Eingabe-Terminal als Master-Terminal dient, und wobei über das Master-Terminal Befehle für den Betrieb mehrerer der Arbeitsstellen eingegeben werden. Weiterhin betrifft die Erfindung eine entsprechende Spinn- oder Spulmaschine.

Ferner wird eine Spinn- oder Spulmaschine mit einer Vielzahl gleichartiger Arbeitsstellen und mehreren im Bereich der Arbeitsstellen angeordneten Eingabe-Terminals beschrieben, wobei zumindest zeitweise wenigstens ein Eingabe-Terminal als Master-Terminal dient, und wobei über das Master-Terminal Befehle für den Betrieb mehrerer der Arbeitsstellen erteilbar sind.

Spinn- oder Spulmaschinen mit einer Vielzahl gleichartiger Arbeitsstellen, an denen jeweils ein Faden hergestellt und/oder von einer Hülse auf eine andere umgespult wird, sind bekannt. In der Vergangenheit wurden die Arbeitsstellen einer solchen Textilmaschine gemeinsam angetrieben und entsprechend zentral gesteuert. Zur manuellen Eingabe von Steuerbefehlen diente üblicherweise ein an der Zentralsteuerung angeordnetes Tastenfeld. In jüngster Zeit geht die Entwicklung von Textilmaschinen in die Richtung, jede der Arbeitsstellen mit Einzelantrieben auszustatten und damit immer unabhängiger voneinander zu machen. Potentiell können so alle Arbeitsstellen einer Spinn- oder Spulmaschine unabhängig voneinander mit unterschiedlichen Parametern betrieben werden, und, im Falle von Spinnmaschinen, Fäden mit unterschiedlichen Eigenschaften hergestellt werden. Um dieses Potential nutzen zu können, ist es wichtig, die einzelnen Arbeitsstellen effizient zu steuern bzw. entsprechendem Personal die Möglichkeit zu bieten, die Arbeitsstellen individuell zu bedienen.

Hierzu beschreibt die DE 199 30 714 A1 eine Textilmaschine mit Arbeitsstellen, die jeweils eine individuelle Steuerung, mindestens eine individuelle Anzeigevorrichtung und einen Taster aufweisen. In erster Linie dient der Taster hier der Steuerung der Anzeige. Es ist jedoch auch beschrieben, dass mit Hilfe des Tasters der jeweiligen Arbeitsstelle einfache Befehle gegeben werden können, wie beispielsweise das Stillsetzten der Arbeitsstelle. Nachteilig ist, dass sich das Bedienpersonal bei der genannten Erfindung am Ort der jeweiligen Arbeitsstelle befinden muss, um diese mit dem beschriebenen Taster zu bedienen.

Die EP 3 170 778 A1 beschreibt ein System zur Verwaltung eines Verbunds aus mehreren Textilmaschinen, der unter anderem eine Terminalvorrichtung umfasst, mit welcher wenigstens eine der Faserverarbeitungseinheiten des Textilmaschinenverbundes verwaltet werden kann. Die Terminalvorrichtung der genannten Erfindung ist beispielsweise als drahtloses Handgerät ausgeführt. Zwangläufig wäre eine solche Terminalvorrichtung batteriebetrieben und müsste folglich regelmäßig aufgeladen, bzw. mit neuen Batterien ausgestattet werden. Zusätzlich unterliegt eine solche Terminalvorrichtung Problemen der drahtlosen Datenübertragung, wie Abschattung oder Interferenzen, die in der typischen Umgebung von Textilmaschinen nicht unwahrscheinlich sind.

Die EP 3 162 930 A1 beschreibt mehrere Anzeigeeinheiten, über die Daten über unterschiedliche Arbeitsstellen einer Textilmaschine abgerufen werden können. Durch Eingaben an den Anzeigeeinheiten kann zwischen der Anzeige von Daten verschiedener Arbeitsstellen durchgeschalten werden.

Weiterhin beschreibt die EP 2 108 723 A2 die drahtlose Kommunikation zur Informationsübertragung zwischen den Steuerungen mehrerer Textilmaschinen. Die DE 40 08 794 A1 beschreibt miteinander vernetzte Vorrichtungen zur Produktionsüberwachung an mehreren Spinnmaschinen, wobei eine Übertragung von Produktionsüberwachungsdaten jeder Spinnmaschine an eine bestimmte Vorrichtung durch einen Schalter ausgelöst werden kann.

Aufgabe der vorliegenden Erfindung ist es, die Bedienung von Arbeitsstellen einer Spinn- oder Spulmaschine zu erleichtern.

Die Aufgabe wird gelöst durch ein Verfahren und eine Spinn- oder Spulmaschine mit den Merkmalen der unabhängigen Patentansprüche.

Das vorgeschlagene Verfahren beschreibt den Betrieb einer Spinn- oder Spulmaschine mit einer Vielzahl gleichartiger Arbeitsstellen und mehreren im Bereich der Arbeitsstellen angeordneten Eingabe-Terminals. Zumindest zeitweise dient wenigstens ein Eingabe-Terminal als Master-Terminal, über das Befehle für den Betrieb mehrerer der Arbeitsstellen der Spinn- oder Spulmaschine eingegeben werden.

Erfindungsgemäß wird vorgeschlagen, dass zu unterschiedlichen Zeitpunkten unterschiedliche Eingabe-Terminals als Master-Terminal dienen.

Ein Eingabe-Terminal stellt in diesem Zusammenhang eine Vorrichtung dar, durch die das Bedienpersonal Eingaben vornehmen kann, die von entsprechenden Steuereinheiten der Spinn- oder Spulmaschine interpretiert werden können. Insbesondere können Tastaturen bzw. einzelne Tasten, Mäuse, Berührungsbildschirme oder eine Kombination aus den genannten und/oder zusätzlichen geeigneten Elementen ein Eingabe-Terminal bilden.

Ein Master-Terminal stellt ein ausgezeichnetes Eingabe-Terminal dar, dessen Eingaben vorrangig gegenüber anderen Eingabe-Terminals behandelt werden. Außerdem können über das Master-Terminal insbesondere Befehle zum Betrieb mehrerer der Arbeitsstellen der Spinn- oder Spulmaschine eingegeben werden. Vorzugsweise dient zu jedem Zeitpunkt genau ein Eingabe-Terminal als Master-Terminal. Außerdem wird vorzugsweise ein Eingabe-Terminal zum Master-Terminal, wenn an diesem Eingaben durch das Bedienpersonal vorgenommen werden oder das jeweilige Terminal vom Bediener durch entsprechende Eingaben des Bedieners als Master-Terminal ausgewählt wird.

Durch die Anordnung mehrerer Eingabe-Terminals im Bereich der Arbeitsstellen der Spinn-oder Spulmaschine, von denen jedes bei Bedarf als Master-Terminal dienen kann, wird es dem Bedienpersonal möglich, nahezu unabhängig vom Aufenthaltsort jede Arbeitsstelle der Spinn- oder Spulmaschine individuell manuell zu steuern.

Vorteilhafterweise ist jedem Eingabe-Terminal eine Anzeigeeinrichtung zugeordnet, durch die Informationen zu wenigstens einer der Arbeitsstellen der Spinn- oder Spulmaschine angezeigt werden. Eine derartige Anzeige erleichtert die Eingabe von Befehlen, indem beispielsweise die Auswahl der zu steuernden Arbeitsstellen erleichtert wird und/oder die Auswirkungen erteilter Befehle angezeigt werden.

Vorzugsweise ist jeder Anzeigeeinrichtung genau ein Eingabe-Terminal zugeordnet. Es ist jedoch ebenfalls denkbar, dass beispielsweise zwei oder mehrere Eingabe-Terminals einer Anzeigeeinrichtung oder ein Eingabe-Terminal mehreren benachbarten Arbeitsstellen zugeordnet sind.

Vorteilhafterweise umfasst die Anzeigeeinrichtung weitere Funktionen, wie beispielsweise das Anzeigen von Störungen und/oder das Anzeigen zusätzlicher arbeitsstellen- bzw. maschinenbezogener Informationen. Das Eingabe-Terminal könnte hierbei ebenfalls der Steuerung der Anzeigeeinrichtung dienen. Insbesondere werden von der Anzeigeeinrichtung Text und/oder Symbole zur Darstellung komplexer Zusammenhänge angezeigt.

Es ist von Vorteil, wenn die über die Eingabe-Terminals eingegebenen Befehle für den Betrieb der Arbeitsstellen an eine zentrale Steuereinheit gesendet werden, die mit mehreren Arbeitsstellen in steuermäßiger Verbindung steht. Insbesondere wäre es vorteilhaft, wenn die eingegebenen Befehle an eine zentrale Steuereinheit gesendet würden, die mit allen Arbeitsstellen der Spinn- oder Spulmaschine in steuermäßiger Verbindung steht. Hierdurch lassen sich eventuelle untergeordnete Steuereinheiten einsparen.

Weiterhin ist es vorteilhaft, wenn die über die Eingabe-Terminals eingegebenen Befehle für den Betrieb der Arbeitsstellen an wenigstens eine dezentrale Steuereinheit gesendet werden, wobei die wenigstens eine dezentrale Steuereinheit mit wenigstens einer Arbeitsstelle in steuermäßiger Verbindung steht.

Insbesondere wäre es vorteilhaft, wenn die über die Eingabe-Terminals eingegebenen Befehle an arbeitsstelleneigene Steuereinheiten gesendet würden. Hierdurch wird es möglich, die Spinn- oder Spulmaschine bei Ausfall einzelner Steuereinheiten zum größten Teil unverändert weiter zu betreiben. Insbesondere bei einer Vielzahl gleichberechtigter Steuereinheiten und einem damit verbundenen großen Maß an Redundanz kann die Spinn- oder Spulmaschine im Wartungsfall einzelner Steuereinheiten unverändert weiterbetrieben werden.

Zusätzlich ist es vorteilhaft, wenn die aus den über die Eingabe-Terminals eingegebenen Befehle für den Betrieb der Arbeitsstellen resultierenden Steuersignale von der zentralen und/oder der wenigstens einen dezentralen Steuereinheit an mehrere Arbeitsstellen gesendet werden. Garn wird üblicherweise in Massenproduktion hergestellt oder umgespult. Deshalb ist es von Vorteil, wenn mehrere bzw. viele Arbeitsstellen einer Spinn- oder Spulmaschine mit denselben Parametern betrieben werden bzw. gemeinsam gesteuert werden. Es ist aber ebenfalls denkbar, Garne mit speziellen Eigenschaften, die nur in geringen Mengen benötigt werden, an einzelnen Arbeitsstellen herzustellen oder umzuspulen und diese Arbeitsstellen entsprechend unabhängig zu steuern.

Hierzu ist es weiterhin von Vorteil, wenn mehrere Arbeitsstellen in eine vordefinierte Gruppe zusammengefasst sind, wobei alle Arbeitsstellen der Gruppe gemeinsam mit Hilfe der am Master-Terminal eingegebenen Befehle gesteuert werden. Die beschriebene vordefinierte Gruppe kann durch Hardware oder Software bestimmt sein und erleichtert dem Bedienpersonal die gleichzeitige Steuerung mehrerer Arbeitsstellen. Vorzugsweise sind alle Arbeitsstellen der Spinn- oder Spulmaschine in vordefinierte Gruppen eingeteilt. Es bietet sich beispielsweise an, die Arbeitsstellen je einer Seite der Spinn- oder Spulmaschine zu einer Gruppe zusammenzufassen. Auch könnte es eine Vielzahl vordefinierter Gruppen, die jeweils dieselbe Anzahl von Arbeitsstellen beinhalten, geben. So könnten beispielsweise jeweils vier Arbeitsstellen zu einer Gruppe zusammengefasst sein.

Im Falle einer softwareseitigen Festlegung der Gruppen wäre es von Vorteil, wenn die Gruppen den Ansprüchen entsprechend verändert werden könnten. So wäre es denkbar, dass durch Eingaben am Master-Terminal die Gruppenzuordnung der Arbeitsstellen verändert bzw. aufgelöst werden kann.

Nach einer vorteilhaften Weiterbildung des Verfahrens wird im Rahmen einer Standardeinstellung automatisch ein Eingabe-Terminal als Master-Terminal für alle oder eine definierte Gruppe von Arbeitsstellen gewählt. Beispielsweise könnte ein an der Stirnseite der Spinn- oder Spulmaschine angeordnetes Eingabe-Terminal standardmäßig als Master-Terminal festgelegt sein. Diese Standardeinstellung ähnelt dem Stand der Technik mit einer zentralen Maschinensteuerung. Vorzugsweise wird ein Eingabe-Terminal, an dem vom Personal Eingaben vorgenommen werden, automatisch ohne weiteres Zutun zum Master-Terminal. Es wäre ebenfalls denkbar, dass das Master-Terminal nur oder zusätzlich manuell festgelegt werden kann. Eingabe-Terminals, die in diesem Fall nicht Master-Terminal sind, könnten einen eingeschränkten Funktionsumfang besitzen, wie beispielsweise nur die Steuerung einer zugeordneten Anzeige.

Die weiterhin vorgeschlagene Spinn- oder Spulmaschine umfasst eine Vielzahl gleichartiger Arbeitsstellen und mehrere im Bereich der Arbeitsstellen angeordnete Eingabe-Terminals, wobei zumindest zeitweise wenigstens ein Eingabe-Terminal als Master-Terminal dient, und wobei über das Master-Terminal Befehle für den Betrieb mehrerer der Arbeitsstellen erteilbar sind.

Erfindungsgemäß ist vorgesehen, dass mehrere Eingabe-Terminals ausgebildet sind, als Master-Terminal zu dienen.

Durch das Master-Terminal ist es möglich, vorzugsweise beliebige und insbesondere alle Arbeitsstellen der Spinn- oder Spulmaschine manuell zu steuern. Das Anordnen von mehreren Eingabe-Terminals im Bereich der Arbeitsstellen, von denen vorzugsweise alle ausgebildet sind als Master-Terminal dienen zu können, erlaubt dem Bedienpersonal eine nahezu ortsunabhängige individuelle Steuerung der Arbeitsstellen der Spinn- oder Spulmaschine.

Beispielsweise wäre es denkbar, an jeder Arbeitsstelle ein Eingabe-Terminal anzuordnen. Insbesondere wäre es ebenfalls möglich, die Eingabe-Terminals im Abstand zueinander einer gewissen Anzahl von Arbeitsstellen anzuordnen.

Weiterhin ist es für die Spinn- oder Spulmaschine von Vorteil, wenn jedem Eingabe-Terminal eine Anzeigeeinrichtung zugeordnet ist. Anzeigeeinrichtungen zum Melden von Störungen oder zum Abrufen arbeitsstellen- bzw. maschinenbezogener Daten werden bereits in Spinn- oder Spulmaschinen verbaut und lassen sich gut mit den erfindungsgemäßen Eingabe-Terminals verbinden. Die angezeigten Informationen erlauben dem Bedienpersonal fundierte Entscheidungen beim manuellen Steuern der Arbeitsstellen. Außerdem können die Anzeigeeinrichtungen direkte Rückmeldung beim Auswählen bestimmter Arbeitsstellen oder beim Erteilen von Steuerungsbefehlen geben.

Vorzugsweise ist jeder Anzeigeeinrichtung genau ein Eingabe-Terminal zugeordnet. Es wäre aber auch denkbar, dass sich mehrere Eingabe-Terminals eine Anzeigeeinrichtung teilen.

Von Vorteil wäre es außerdem, wenn die Eingabe-Terminals gleichermaßen zur Steuerung der Anzeigeeinrichtungen dienen. Beispielsweise könnten so die Art der angezeigten Informationen und/oder die betreffenden Arbeitsstellen durch das Eingabe-Terminal verändert werden. Um einen hohen Informationsgehalt abbilden zu können, ist die jeweilige Anzeigeeinrichtung vorzugsweise als Farbdisplay ausgebildet, das sowohl Text als auch Symbole anzeigen kann. Es wäre denkbar, Eingabe-Terminal und Anzeigeeinrichtung beispielsweise in Form eines berührungssensitiven Bildschirms zu vereinigen.

Ebenso ist es vorteilhaft, wenn mehrere der Eingabe-Terminals fest mit der Spinn- oder Spulmaschine verbunden sind. Vorzugsweise sind die Eingabe-Terminals ebenfalls fest mit der Spinn- oder Spulmaschine verkabelt und physisch an ihre Datenübertragungseinrichtung angeschlossen. Damit entfallen die Probleme der Stromversorgung durch Batterien und der kabellosen Datenübertragung. Zusätzliche drahtlose Handgeräte sind aber ebenfalls denkbar.

Es ist für die Spinn- oder Spulmaschine von Vorteil, wenn die Eingabe-Terminals kabellos oder kabelgebunden mit einer zentralen Steuereinheit verbunden sind, die mit mehreren Arbeitsstellen in steuermäßiger Verbindung steht. Insbesondere wäre es vorteilhaft, wenn diese zentrale Steuereinheit mit allen Arbeitsstellen der Spinn- oder Spulmaschine in steuermäßiger Verbindung steht. Hierdurch lassen sich untergeordnete Steuereinrichtungen einsparen.

Zusätzlich ist es für die Spinn- oder Spulmaschine vorteilhaft, wenn die Eingabe-Terminals mit wenigstens einer dezentralen Steuereinheit verbunden sind oder diese umfassen, wobei die jeweilige dezentrale Steuereinheit mit wenigstens einer Arbeitsstelle in steuermäßiger Verbindung steht. Es wäre insbesondere vorteilhaft, wenn die Arbeitsstellen jeweils mit mehreren dezentralen Steuereinheiten in steuermäßiger Verbindung stehen. Hierdurch entsteht eine Redundanz, die es erlaubt, die Spinn- oder Spulmaschine beim Ausfall einzelner Steuereinheiten und/oder beim Ausfall einzelner Eingabe-Terminals unverändert weiter zu betreiben.

Eine Kombination aus einer zentralen Steuereinheit und mehreren dezentralen Steuereinheiten wäre ebenfalls denkbar und durch die Kombination der Vorzüge beider Konzepte vorteilhaft für die Spinn- oder Spulmaschine.

Im Folgenden wird die Erfindung anhand eines Ausführungsbeispiels näher erläutert.

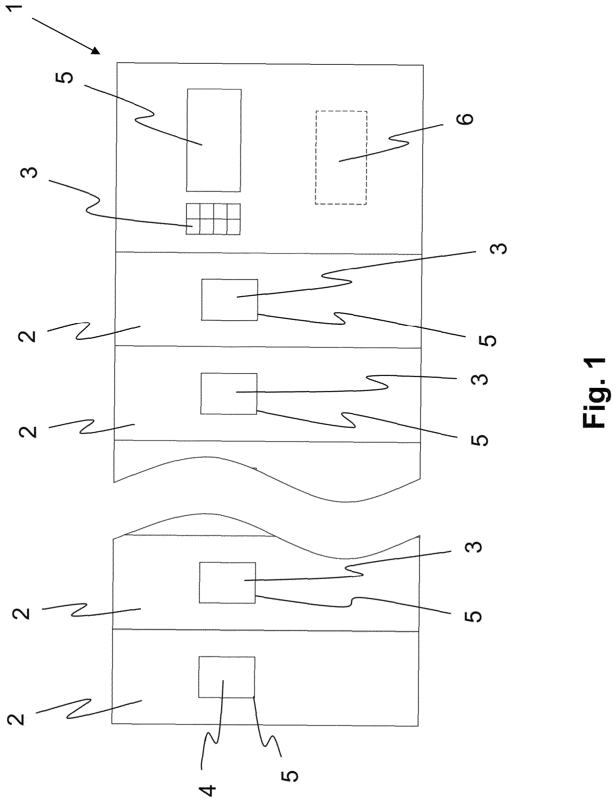

- **Figur 1**: zeigt eine Spinn- oder Spulmaschine 1 mit einer Vielzahl von Arbeitsstellen 2.

Vorzugsweise ist jede Arbeitsstelle 2 mit einer Anzeigeeinrichtung 5 und/oder einem Eingabe-Terminal 3 ausgestattet. Hierdurch wird der Weg für das Bedienpersonal zum Abrufen von Informationen und/oder Tätigen von Eingaben minimal.

Anzeigeeinrichtung 5 und Eingabe-Terminal 3 könnten beispielsweise in Form eines berührungssensitiven Bildschirms kombiniert sein. Dies spart Platz an der jeweiligen Arbeitsstelle und erlaubt trotzdem komplexe Eingaben, bzw. das Anzeigen umfangreicher Informationen.

Auch ist es denkbar, dass Eingabe-Terminals 3 in verschiedenen Ausführungsformen an einer Spinn- oder Spulmaschine 1 vorhanden sind. So könnten beispielsweise berührungssensitive Bildschirme an den Arbeitsstellen 2 als Eingabe-Terminals 3 dienen und am Maschinenende ein Tastenfeld vorhanden sein, das mit einer separaten Anzeigeeinrichtung 5 in Verbindung steht.

Ein dem Stand der Technik ähnliches Eingabe-Terminal 3, beispielsweise am Maschinenende, erlaubt es einer nach dem Stand der Technik geschulten Bedienperson ohne weiteres die erfindungsgemäße Spinn- oder Spulmaschine 1 zu bedienen. Vorzugsweise kann jedes der Eingabe-Terminals 3 zu einem Master-Terminal 4 werden.

Außerdem ist ein Master-Terminal 4 in der Lage, Befehle zum Steuern vorzugsweise mehrerer und insbesondere aller Arbeitsstellen 2 entgegenzunehmen und direkt oder über eine zentrale Steuereinheit 6 an die jeweiligen Arbeitsstellen 2 weiterzugeben. Die Festlegung eines Master-Terminals 4 erfolgt beispielsweise manuell durch Eingaben. Auch könnte ein Eingabe-Terminal 3 bei Benutzung durch eine Bedienperson automatisch zu einem Master-Terminal 4 werden. Im Rahmen einer Standardeinstellung könnte, ohne ausdrückliche Festlegung durch etwaige Eingaben, beispielsweise das Eingabe-Terminal 3 am Maschinenende ein Master-Terminal 4 sein.

Zur Weitergabe und Umsetzung von Steuerungsbefehlen sind die Eingabe-Terminals 3 mit wenigstens einer Steuereinheit 6 verbunden. Diese könnte vorzugsweise alle Arbeitsstellen 2 der Spinn- oder Spulmaschine 1 zentral steuern. Ein Master-Terminal 4 würde in diesem Fall Steuerungsbefehle an die zentrale Steuereinheit 6 senden, die wiederum die konkrete Ausführung der Befehle an den jeweiligen Arbeitsstellen 2 veranlasst.

Ebenfalls wäre es möglich, dass die Steuereinheit 6 Bestandteil einer dezentralen Steuerung ist. Beispielsweise könnte jede Arbeitsstelle 2 eine Steuereinheit 6 aufweisen. Auch wäre es denkbar, jeweils vier Arbeitsstellen 2 einer Steuereinheit 6 zuzuordnen. Um Redundanz zu schaffen und damit gegen Ausfall einzelner Elemente zu schützen, wäre es in diesem Fall denkbar, jede Arbeitsstelle 2 mit mehreren gleichberechtigten Steuereinheiten 6 zu verbinden.

Eine Kombination aus übergeordneter zentraler Steuerung und untergeordneten dezentralen Steuereinheiten 6 wäre ebenfalls möglich. Dabei würde sich eine Anordnung der Eingabe-Terminals 3 an den dezentralen Steuereinheiten 6 anbieten.

Zur Erleichterung der Steuerung mehrerer Arbeitsstellen 2 durch das Bedienpersonal könnten jeweils mehrere Arbeitsstellen 2 zu Gruppen zusammengefasst sein, für die Befehle des Master-Terminals 4 gemeinsam gelten. Die genannten Gruppen können fest vorgegeben sein oder vom Bedienpersonal frei eingeteilt werden. Beispielsweise würde es sich anbieten, die Arbeitsstellen 2 jeweils einer Maschinenseite in eine der beschriebenen Gruppen zusammenzufassen. Auch ist es denkbar, die Arbeitsstellen 2, die jeweils einer Steuereinheit 6 zugeordnet sind, zu jeweils einer Gruppe zusammenzufassen.

Als Beispiele für Befehle, die an einem Master-Terminal 4 eingegeben werden können, kommen in Frage: Starten bzw. Stillsetzen, Starten bzw. Stoppen automatischer Prozesse, Änderung von Betriebsparametern, Herbeirufen eines Serviceaggregats, Festlegen von Mengenvorgaben und Festlegen von Bedingungen für Alarmsignale jeweils für eine oder mehrere Arbeitsstellen.

### Bezugszeichenliste

- 1: Spinn- oder Spulmaschine
- 2: Arbeitsstelle
- 3: Eingabe-Terminal
- 4: Master-Terminal
- 5: Anzeigeeinrichtung
- 6: Steuereinheit

## Patentansprüche

1. Verfahren zum Betreiben einer Spinn- oder Spulmaschine (1) mit einer Vielzahl gleichartiger Arbeitsstellen (2) und mehreren im Bereich der Arbeitsstellen (2) angeordneten Eingabe-Terminals (3), wobei zumindest zeitweise wenigstens ein Eingabe-Terminal (3) als Master-Terminal (4) dient, und wobei über das Master-Terminal (4) Befehle für den Betrieb mehrerer der Arbeitsstellen (2) eingegeben werden, **dadurch gekennzeichnet, dass** zu unterschiedlichen Zeitpunkten unterschiedliche Eingabe-Terminals (3) als Master-Terminal (4) dienen.

2. Verfahren nach dem vorherigen Anspruch, **dadurch gekennzeichnet, dass** jedem Eingabe-Terminal (3) eine Anzeigeeinrichtung (5) zugeordnet ist, durch die Informationen zu wenigstens einer der Arbeitsstellen (2) der Spinn- oder Spulmaschine (1) anzeigt werden.

3. Verfahren nach einem der vorherigen Ansprüche, **dadurch gekennzeichnet, dass** die über die Eingabe-Terminals (3) eingegebenen Befehle für den Betrieb der Arbeitsstellen (2) an eine zentrale Steuereinheit (6) gesendet werden, wobei die zentrale Steuereinheit (6) mit mehreren Arbeitsstellen (2) in steuermäßiger Verbindung steht.

4. Verfahren nach einem der vorherigen Ansprüche, **dadurch gekennzeichnet, dass** die über die Eingabe-Terminals (3) eingegebenen Befehle für den Betrieb der Arbeitsstellen (2) an wenigstens eine dezentrale Steuereinheit (6) gesendet werden, wobei die wenigstens eine dezentrale Steuereinheit (6) mit wenigstens einer Arbeitsstelle (2) in steuermäßiger Verbindung steht.

5. Verfahren nach Anspruch 3 und 4, **dadurch gekennzeichnet, dass** die aus den über die Eingabe-Terminals (3) eingegebenen Befehle für den Betrieb der Arbeitsstellen (2) resultierenden Steuersignale von der zentralen und/oder der wenigstens einen dezentralen Steuereinheit (6) an mehrere Arbeitsstellen (2) gesendet werden.

6. Verfahren nach einem der vorherigen Ansprüche, **dadurch gekennzeichnet, dass** mehrere Arbeitsstellen (2) in eine vordefinierte Gruppe zusammengefasst sind, wobei alle Arbeitsstellen (2) der Gruppe gemeinsam mit Hilfe der am Master-Terminal (4) eingegebenen Befehle gesteuert werden.

7. Verfahren nach einem der vorherigen Ansprüche, **dadurch gekennzeichnet, dass** im Rahmen einer Standardeinstellung automatisch ein Eingabe-Terminal (3) als Master-Terminal (4) gewählt wird.

8. Spinn- oder Spulmaschine (1) mit einer Vielzahl gleichartiger Arbeitsstellen (2) und mehreren im Bereich der Arbeitsstellen (2) angeordneten Eingabe-Terminals (3), wobei zumindest zeitweise wenigstens ein Eingabe-Terminal (3) als Master-Terminal (4) dient, und wobei über das Master-Terminal (4) Befehle für den Betrieb mehrerer der Arbeitsstellen (2) erteilbar sind, **dadurch gekennzeichnet, dass** mehrere Eingabe-Terminals (3) ausgebildet sind, als Master-Terminal (4) zu dienen.

9. Spinn- oder Spulmaschine (1) nach dem vorherigen Anspruch,
**dadurch gekennzeichnet, dass** jedem Eingabe-Terminal (3) eine Anzeigeeinrichtung (5) zugeordnet ist.

10. Spinn- oder Spulmaschine (1) nach Anspruch 8 oder 9, **dadurch gekennzeichnet, dass** mehrere der Eingabe-Terminals (3) fest mit der Spinn- oder Spulmaschine (1) verbunden sind.

11. Spinn- oder Spulmaschine (1) nach einem der Ansprüche 8 bis 10, **dadurch gekennzeichnet, dass** die Eingabe-Terminals (3) mit einer zentralen Steuereinheit (6), die mit mehreren Arbeitsstellen (2) in steuermäßiger Verbindung steht, verbunden sind.

12. Spinn- oder Spulmaschine (1) nach einem der Ansprüche 8 bis 11, **dadurch gekennzeichnet, dass** die Eingabe-Terminals (3) mit wenigstens einer dezentralen Steuereinheit (6), die mit wenigstens einer Arbeitsstelle (2) in steuermäßiger Verbindung steht, verbunden sind.

## Claims

1. A method for operating a spinning machine or winder (1) comprising a plurality of workstations (2) of the same kind and multiple input terminals (3) situated in the region of the workstations (2), wherein at least one input terminal (3) acts, at least intermittently, as the master terminal (4), and wherein commands for the operation of several of the workstations (2) are entered via the master terminal (4), **characterized in that** different input terminals (3) can act as the master terminal (4) at different points in time.

2. The method as claimed in the preceding claim, **characterized in that** a display device (5) is assigned to each input terminal (3), with the aid of which information regarding at least one of the workstations (2) of the spinning machine or winder (1) is displayed.

3. The method as claimed in one of the preceding claims, **characterized in that** the commands for the operation of the workstations (2), which have been entered via the input terminals (3), are sent to a central control unit (6), wherein the central control unit (6) is connected to multiple workstations (2) for control purposes.

4. The method as claimed in one of the preceding claims, **characterized in that** the commands for the operation of the workstations (2), which have been entered via the input terminals (3), are sent to at least one decentralized control unit (6), wherein the at least one decentralized control unit (6) is connected to at least one workstation (2) for control purposes.

5. The method as claimed in claims 3 and 4, **characterized in that** the control signals resulting from the commands for the operation of the workstations (2), which have been entered via the input terminals (3), are sent from the central control unit (6) and/or the at least one decentralized control unit (6) to multiple workstations (2).

6. The method as claimed in one of the preceding claims, **characterized in that** multiple workstations (2) are combined into one predefined group, wherein all workstations (2) in the group are jointly controlled with the aid of the commands entered at the master terminal (4).

7. The method as claimed in one of the preceding claims, **characterized in that** an input terminal (3) is automatically selected as the master terminal (4) within the scope of a standard setting.

8. A spinning machine or winder (1) comprising a plurality of workstations (2) of the same kind and multiple input terminals (3) situated in the region of the workstations (2), wherein at least one input terminal (3) acts, at least intermittently, as the master terminal (4), and wherein commands for the operation of several of the workstations (2) can be issued via the master terminal (4), **characterized in that** multiple input terminals (3) are designed to act as the master terminal (4).

9. The spinning machine or winder (1) as claimed in the preceding claim, **characterized in that** a display device (5) is assigned to each input terminal (3).

10. The spinning machine or winder (1) as claimed in claims 8 or 9, **characterized in that** multiple of the input terminals (3) are fixedly connected to the spinning machine or winder (1).

11. The spinning machine or winder (1) as claimed in claims 8 to 10, **characterized in that** the input terminals (3) are connected to a central control unit (6) which is connected to multiple workstations (2) for control purposes.

12. The spinning machine or winder (1) as claimed in claims 8 to 11, **characterized in that** the input terminals (3) are connected to at least one decentralized control unit (6) which is connected to at least one workstation (2) for control purposes.

## Revendications

1. Procédé pour exploiter une machine de filature ou de bobinage (1) comportant une pluralité de postes de travail (2) de même type et plusieurs terminaux de saisie (3) disposés dans la zone des postes de travail (2), dans lequel au moins un terminal de saisie (3) sert au moins temporairement de terminal maître (4), et dans lequel des instructions pour l'exploitation de plusieurs des postes de travail (2) sont saisies par l'intermédiaire du terminal maître (4), **caractérisé en ce que** des terminaux de saisie (3) différents servent de terminal maître (4) à des instants différents.

2. Procédé selon la revendication précédente, caractérisé en ce qu'un dispositif d'affichage (5) est associé à chaque terminal de saisie (3), par lequel sont affichées des informations relatives à au moins l'un des postes de travail (2) de la machine de filature ou de bobinage (1).

3. Procédé selon l'une quelconque des revendications précédentes, **caractérisé en ce que** les instructions introduites par l'intermédiaire des terminaux de saisie (3) sont envoyées à une unité de commande centrale (6) pour l'exploitation des postes de travail (2), dans lequel l'unité de commande centrale (6) est en liaison de commande avec plusieurs postes de travail (2).

4. Procédé selon l'une quelconque des revendications précédentes, **caractérisé en ce que** les instructions introduites par l'intermédiaire des terminaux de saisie (3) pour l'exploitation des postes de travail (2) sont envoyées à une unité de commande centrale (6), dans lequel l'unité de commande centrale (6) est en liaison de commande avec plusieurs postes de travail (2).

5. Procédé selon les revendications 3 et 4, **caractérisé en ce que** les signaux de commande résultant des instructions saisies via les terminaux de saisie (3) pour l'exploitation des postes de travail (2) sont envoyés à plusieurs postes de travail (2) par l'unité de commande centrale et/ou l'au moins une unité de commande décentralisée (6).

6. Procédé selon l'une quelconque des revendications précédentes, **caractérisé en ce que** plusieurs postes de travail (2) sont regroupés en un groupe prédéfini, dans lequel tous les postes de travail (2) du groupe sont commandés conjointement à l'aide des instructions saisies sur le terminal maître (4).

7. Procédé selon l'une quelconque des revendications précédentes, **caractérisé en ce que**, dans le contexte d'un réglage standard, un terminal de saisie (3) est automatiquement sélectionné comme terminal maître (4).

8. Machine de filature ou de bobinage (1) comportant une pluralité de postes de travail (2) de même type et plusieurs terminaux de saisie (3) disposés dans la zone des postes de travail (2), dans laquelle au moins un terminal de saisie (3) sert au moins temporairement de terminal maître (4), et dans laquelle des instructions pour l'exploitation de plusieurs des postes de travail (2) peuvent être données par l'intermédiaire du terminal maître (4), **caractérisée en ce que** plusieurs terminaux de saisie (3) sont configurés pour servir de terminal maître (4).

9. Machine de filature ou de bobinage (1) selon la revendication précédente, caractérisée en ce qu'un dispositif d'affichage (5) est associé à chaque terminal de saisie (3).

10. Machine de filature ou de bobinage (1) selon la revendication 8 ou 9, **caractérisée en ce que** plusieurs des terminaux de saisie (3) sont solidement reliés à la machine de filature ou de bobinage (1).

11. Machine de filature ou de bobinage (1) selon l'une quelconque des revendications 8 à 10, **caractérisée en ce que** les terminaux de saisie (3) sont reliés à une unité de commande centrale (6) qui est en liaison de commande avec plusieurs postes de travail (2).

12. Machine de filature ou de bobinage (1) selon l'une quelconque des revendications 8 à 11, **caractérisée en ce que** les terminaux de saisie (3) sont reliés à au moins une unité de commande décentralisée (6) qui est en liaison de commande avec au moins un poste de travail (2).
